# EUROPÄISCHE PATENTSCHRIFT

(11) **EP 0 508 357 B1**
(45) Veröffentlichungstag und Bekanntmachung des Hinweises auf die Patenterteilung: **19.07.1995**
(21) Anmeldenummer: 92105948.1
(22) Anmeldetag: 07.04.1992
(51) Int. Cl.: G05D 16/20, F23N 1/00

(54) **Über einen Tauchspulantrieb steuerbarer Servodruckregler**
Servo Pressure Regulator actuated by a moving Coil Operator
Servorégulateur de pression actionné par une bobine se déplaçant dans un champ magnétique

(30) Priorität: 12.04.1991 DE 4111945
(43) Veröffentlichungstag der Anmeldung: 14.10.1992
(73) Patentinhaber: HONEYWELL B.V., NL-1101 EA Amsterdam Z.O. (NL)
(72) Erfinder: Vrolijk, Enno, NL-7751 BC Dalen (NL); Pragt, Johan H., NL-7741 ZG Coevorden (NL)
(74) Vertreter: Rentzsch, Heinz, Dipl.-Ing.

(56) Entgegenhaltungen:
- EP-A- 0 230 477
- EP-A- 0 272 348
- DE-A- 3 221 441
- US-A- 3 470 911

## Beschreibung

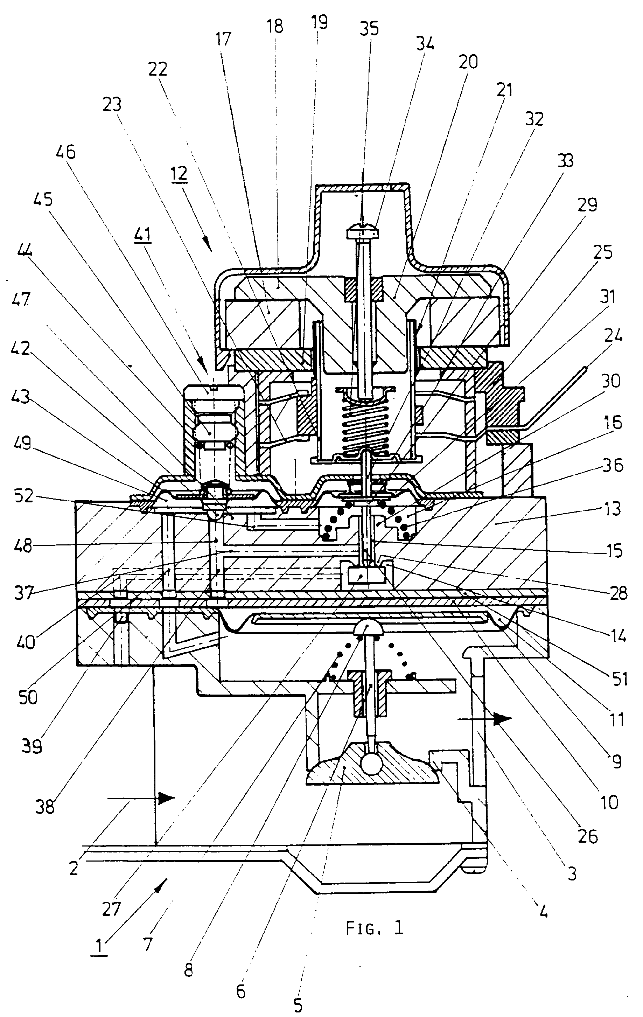

Druckregler mit Tauchspulantrieb sind in zahlreichen Varianten, beispielsweise aus FR-B- 82 398, FR-B- 12 40 632, EP-B- 0 088 371, DE-A- 21 02 197, DE-GM 88 10 588 sowie US-A- 29 15 045 bekannt. Ein über einen Tauchspulantrieb steuerbarer Gasdruckregler gemäß Gattungsbegriff des Anspruchs 1 ist in Figur 1 der EP-A- 0 230 477 dargestellt. Zur Einschaltung des dortigen Druckreglers ist ein zusätzlicher Magnetantrieb vorgesehen, der bei Erregung den Schließkörper des Hauptventils freigibt, so daß dieser unter dem Einfluß des Steuerdrucks gegen die Kraft seiner Schließfeder vom Ventilsitz abheben kann.

Aufgabe der vorliegenden Erfindung ist es, den Aufbau eines derartigen Gasdruckreglers zu vereinfachen und zu verbessern. Sie unterscheidet sich vom Gasdruckregler gemäß EP-A- 0 230 477 vorteilhaft dadurch, daß zum Einschalten, d.h. Aktivieren des Gasdruckreglers, kein besonderer Magnetantrieb erforderlich ist, sondern der gleiche Tauchspulantrieb verwendet wird, welcher auch der Steuerung des Ausgangsdruckes des Druckreglers dient. Gegenüber dem in der älteren, aber nicht vorveröffentlichten Anmeldung 91 110 012.1 (EP-A- 0 462 583) beschriebenen membrangesteuerten Gasdruckregler hat die vorliegende Erfindung den Vorteil, daß der Regler auch auf herkömmliche Hauptgasventile als Baugruppe aufsetzbar ist, weil er keinen von einem axialen Kanal durchsetzten und in seinem Innenraum einen Ventilsitz bildenden Hauptschließkörper benötigt. Vorteilhafte Ausgestaltungen der Erfindung ergeben sich aus den Unteransprüchen.

In der Zeichnung sind zwei Ausführungsbeispiele des neuen Druckreglers schematisch im Schnitt wiedergegeben. Anhand dieser Ausführungsbeispiele wird nachfolgend die Erfindung erläutert.

Im unteren Teil der Zeichnung ist ein herkömmliches, membrangesteuertes Hauptgasventil 1 dargestellt mit einem Gaseinlaß 2 und einem Gasauslaß 3 sowie einem dazwischen angeordneten Hauptgasventil bestehend aus Ventilsitz 4, Hauptschließkörper 5 und Ventilstange 6. Es steht unter dem Einfluß einer sich einseitig gehäusefest abstützenden Schließfeder 7, welche somit einerseits den Schließkörper 5 gegen den Ventilsitz 4 zieht und andererseits den Kopf 8 der Ventilstange 6 gegen die Arbeitsmembran 9 drückt. Zwischen dieser und einer Zwischenplatte 10 befindet sich die Antriebskammer 11 für das Hauptgasventil.

Auf die Zwischenplatte 10 ist der Regler 12 mit seinem Gehäuse 13 aufgesetzt und mit dem Ventilgehäuse in nicht näher dargestellter Weise verschraubt. Das Reglergehäuse 13 umschließt drei Kammern, nämlich auf der der Zwischenplatte 10 zugewandten Seite eine Servodruckkammer 14, im mittleren Teil eine durch eine zentrale Bohrung 15 gebildete Steuerdruckkammer 15 sowie auf der dem Tauchspulantrieb zugewandten Seite eine Membrankammer 16.

Der Tauchspulantrieb besteht aus einem Ringmagneten 17 zwischen den beiden Jochen 18 und 19 sowie einem am oberen Joch 18 vorgesehenen Kern 20 und der im Luftspalt zwischen Kern 20 und Joch 19 frei beweglichen Tauchspule 21. Der die Tauchspule 21 tragende zylindrische Träger 22 ist an zwei parallelen Scheiben- oder Blattfedern 23 befestigt, welche einerseits der verschiebbaren Lagerung der Tauchspule 21 und andererseits der Stromzufuhr zur Tauchspule dienen. Die obere Scheibenfeder ist mit dem metallischen Gehäuse verbunden, während die untere mit einer Anschlußfahne 24 durch ein Isolierstück 25 nach außen geführt ist. Die Scheibenfedern haben vorzugsweise die in DE-GM 90 07 086 beschriebene Gestalt.

Durch die Bohrung 15 ragt ein Antriebsstift 26 hindurch, der an seinem unteren Ende den Schließkörper 27 eines Servoventils trägt. Der zugehörige Ventilsitz 28 umgibt ringförmig das untere Ende der Bohrung 15. Ferner ist am mittleren Teil des Antriebsstifts 26 ein kragenförmiger zweiter Ventilschließkörper 29 angebracht, dessen zugehöriger Ventilsitz 30 durch die obere, die Bohrung 15 ringförmig ungebende Stirnfläche gebildet ist. Ventilsitz 30 und Schließkörper 29 bilden zusammen ein Steuerventil. Der Antriebsstift 26 wird von einer Membran 31 getragen, welche die Membrankammer 16 nach oben hin abschließt. Das obere Ende 32 des Antriebsstifts 26 liegt am Boden 33 des topfförmigen Trägers 22 für die Tauchspule 21 an. Zwischen diesem Boden 33 und einem in den Kern 20 eingeschraubten Einstellstift 34 ist eine schwache Schraubenfeder 35 eingespannt. Mit Hilfe der Einstellschraube 34 läßt sich der Nullpunkt der Regelkennlinie des Druckreglers verschieben. Eine Kegelfeder 36 drückt von unten gegen die Membran 31 und sucht somit über den Antriebsstift 26 einerseits das Servoventil 27, 28 zu schließen und andererseits das Steuerventil 29, 30 zu öffnen.

Die Steuerdruckkammer 15 steht über Kanäle 37 und 38 mit der Antriebskammer 11 in Verbindung. Zur Erzeugung des erforderlichen Steuerdrucks gelangt der Eingangsdruck des Reglers vom Einlaß 2 über eine Drosselstelle 39 und einen Kanal 40 in die Servodruckkammer 14. Im gezeigten Ausführungsbeispiel wird der maximale Ausgangsdruck des Reglers durch einen einstellbaren Druckbegrenzer 41 auf einen gewünschten Wert begrenzt. Dieser besteht aus einer einen Schließkörper 42 tragenden Membran 43, die sich über eine Feder 44 an einer Einstellschraube 45 abstützt. Eine Verschlußschraube 46 deckt den die Schraube 45 und die Feder 44 aufnehmenden rohrförmigen Gehäuseteil nach außen hin ab. Der Schließkörper 42 arbeitet mit einem im Reglergehäuse 13 vorgesehenen Ventilsitz 47 zusammen, der über eine Leitung 48 und den bereits erwähnten Verbindungskanal 38 an die Antriebskammer 11 angeschlossen ist. Die Kammer 49 unterhalb der Membran 43 steht über einen Verbindungskanal 50 mit der Auslaßseite 3 des Hauptventils in Verbindung. Zwischen Hauptventil 1 und Reglergehäuse 13 ist außer der Zwischenplatte 10 eine mit entsprechenden Durchbrechungen versehene Dichtung 51 eingelegt.

Der Druckregler ist im stromlosen Zustand der Tauchspule 21 dargestellt. Die relative starke Schließfeder 36 des Servoventils zieht dessen Schließkörper 27 gegen den Sitz 28. Gleichzeitig ist das Steuerventil 29, 30 voll geöffnet. Das Hauptventil 4, 5 ist geschlossen. Unterstützt wird seine Schließfeder 7 durch den ebenfalls in Schließrichtung auf den Schließkörper 5 wirkenden Gasdruck am Einlaß 2.

Soll Gas zu einem nachgeschalteten Brenner strömen, weil ein zu beheizender Raum eine zu niedrige Temperatur hat oder Warmwasser aufgeheizt werden soll, so erzeugt ein elektrischer Thermostat herkömmlicher Bauart einen Strom durch die Tauchspule 21, dessen Stärke dem gewünschten Wärmebedarf proportional ist. Dieser Stromfluß bewirkt, daß die Tauchspule 21 samt Spulenträger 22 nach unten verschoben wird und der Schließkörper 27 vom Ventilsitz 28 des Servoventils abhebt. Damit gelangt zwar über die Drosselstelle 39 und den Kanal 40 sowie das Servoventil 27, 28 ein Steuerdruck in die Steuerdruckkammer 15. Dieser bleibt jedoch unwirksam, weil er über das offene Steuerventil 29, 30 den Kanal 52, die Kammer 49 und den Kanal 50 zum Auslaß 3 hin abgebaut wird. Erst wenn bei weiterem Ansteigen des Stroms durch die Tauchspule 21 der Schließkörper 29 des Steuerventils sich dessen Sitz 30 nähert, kann sich innerhalb der Steuerdruckkammer 15 ein Druck aufbauen, der über die Kanäle 37 und 38 in die Antriebskammer 11 gelangt und über die Membran 9 und die Ventilstange 6 den Schließkörper 5 des Hauptventils von seinem Ventilsitz 4 abhebt. Damit beginnt Gas vom Einlaß 2 zum Auslaß 3 zu strömen. Die Stärke des Stroms durch die Tauchspule 21 und damit die jeweilige Lage des Schließkörpers 29 gegenüber dem Sitz 30 bestimmt die Höhe des Steuerdrucks und damit die Öffnung des Hauptventils 4, 5 und somit den Gasdurchsatz durch das Ventil 1. üblicherweise soll der Druckregler einen konstanten Druck am Auslaß 3 erzeugen, dessen Höhe nur von der Stärke des Stroms durch die Tauchspule 21, nicht aber von etwaigen Druckschwankungen am Einlaß 2 abhängt. Steigt der Druck am Auslaß 3 an, beispielsweise infolge eines Druckanstiegs am Einlaß 2 oder infolge Änderung des Verbrauchs im angeschlossenen Brenner, so gelangt dieser Druckanstieg über den Kanal 50, die Kammer 49 und den Kanal 52 in die Membrankammer 16 und hebt über die Membran 31 den Schließkörper 29 weiter vom Sitz 30 ab. Damit kann der Steuerdruck in den Kammern 14 und 15 stärker über die Kanäle 52 und 50 zum Auslaß hin abgebaut werden. Der Steuerdruck in der Steuerdruckkammer 15 und in der mit dieser über die Kanäle 37 und 38 verbundenen Antriebskammer 11 nimmt ab, so daß der Schließkörper 5 durch die Schließfeder 7 nach oben bewegt und die Gasströmung zum Auslaß 3 hin gedrosselt wird. Damit wird der Druck wieder auf den gewünschten Wert stabilisiert. Bei einem Druckabfall am Auslaß 3 laufen diese Vorgänge mit umgekehrtem Vorzeichen ab.

Der maximale Ausgangsdruck wird durch den Druckbegrenzer 41 auf einen mittels der Schraube 45 einstellbaren Wert begrenzt. Wächst der Ausgangsdruck über einen zulässigen Maximalwert an, so hebt er über den Kanal 50 in der Kammer 49 die Membran 43 und mit ihr den Schließkörper 42 an, so daß der Steuerdruck in der Steuerdruckkammer 15 über den Kanal 48, das Hilfsventil 42, 47 und den Kanal 50 zum Auslaß hin abgebaut wird. Damit nimmt der in der Antriebskammer 11 herrschende Steuerdruck ab, und der Schließkörper 5 bewegt sich in Richtung Schließstellung und drosselt die Gaszufuhr zum Auslaß 3.

Soll die Gaszufuhr beendet werden, so wird die Stromzufuhr durch die Tauchspule 21 abgeschaltet. Es entfällt die von der Tauchspule ausgeübte nach unten gerichtete Kraft auf den Antriebsstift 26, so daß dieser unter der Einwirkung seiner Rückstellfeder 36 nach oben bewegt wird und das Servoventil 27, 28 schließt. Der Steuerdruck in der Steuerdruckkammer 15 entweicht über das dann offene Steuerventil 29, 30 und die Kanäle 52 und 50 zum Auslaß 3 hin. Bei Wegfall des Steuerdrucks in der Antriebskammer 11 schließt das Hauptventil 4, 5 unter der Einwirkung seiner Schließfeder 7.

Im Rahmen der Erfindung sind verschiedene Abwandlungen des in Fig. 1 gezeigten Ausführungsbeispiels möglich. So kann die Begrenzung des maximalen Ausgangsdrucks elektrisch durch Begrenzung des Erregerstroms durch die Tauchspule 21 erfolgen.

Der mechanische Membrandruckbegrenzer 41 entfällt in diesem Fall, der Kanal 48 wird geschlossen und zwischen die Kanäle 52 und 50 eine feste Drosselstelle eingeschaltet. Diese dient dem Abbau des Steuerdrucks beim Abschalten des Reglers.

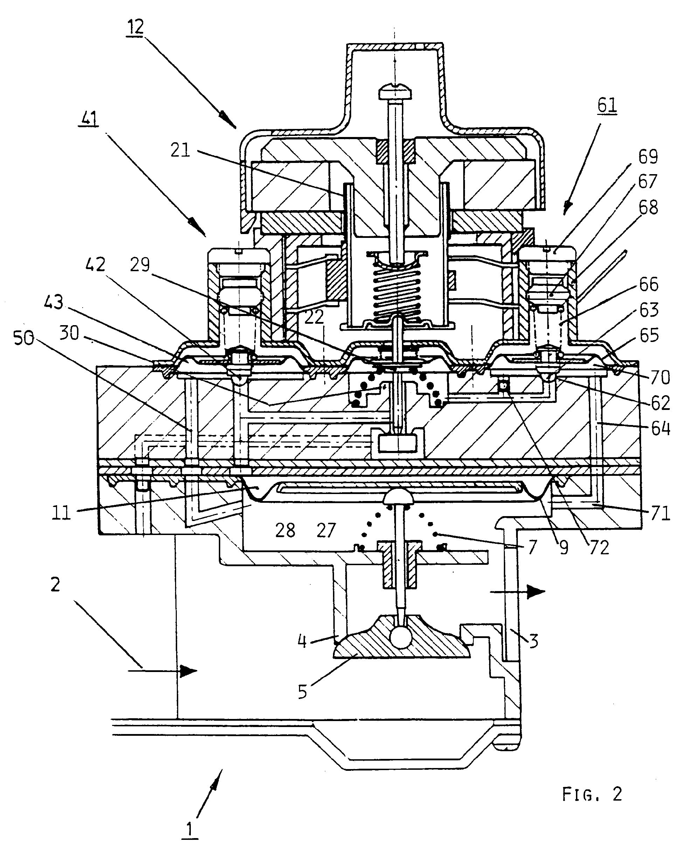

Ferner kann durch einen zweiten ähnlichen mechanischen Membrandruckbegrenzer ein einstellbarer Mindestausgangsdruck vorgegeben werden. Eine solche Ausführungsform zeigt Fig. 2.

Dieser zweite Membrandruckbegrenzer 61 umfaßt ein Ventil bestehend aus Ventilsitz 62 und Schließkörper 63, welches über einen Kanal 64 mit der Membrankammer 16 in Verbindung steht. Der Schließkörper 63 wird von einer Membran 65 getragen, welche unter der Vorspannung einer Feder 66 steht. Diese Feder 66 stützt sich gehäuseseitig an einer Abstützschraube 67 ab, mit deren Hilfe die Vorspannung der Feder 66 einstellbar ist. Die Schraube 67 ist in einem zylindrischen Rohrstück 68 verstellbar, welches nach außen hin durch einen Stopfen 69 abgedeckt ist. Der Raum 70 unter der Membran 65 ist über einen Kanal 71 mit dem Auslaß 3 und über einen düsenförmig verengten Kanal 72 mit der Membrankammer 16 verbunden.

Mit dem Druckbegrenzer 61 läßt sich der minimale Ausgangsdruck und mit dem Druckbegrenzer 41 der maximale Ausgangsdruck am Auslaß 3 des Servodruckreglers einstellen, wobei beide Druckeinstellungen unabhängig voneinander erfolgen können.

In der in Fig. 2 wiedergegebenen Ruhestellung sind alle Ventile, nämlich das Hauptventil 4, 5, das Servoventil 27, 28, das erste Druckbegrenzerventil 42, 47, und das zweite Druckbegrenzerventil 62, 63 geschlossen. Sobald der Tauchspule 21 Strom zugeführt wird, bewegt sich der Spulenkörper 22 und mit ihm der Federteller 29 samt Ventilstange 32 nach unten. Sobald das Servoventil 27, 28 öffnet, gelangt der über den Kanal 40 in die Kammer 14 eintretende Eingangsdruck über den Kanal 38 in die Antriebskammer 11 und bewegt über die Membran 9 den Schließkörper 5 des Hauptventils nach unten, so daß dieses Hauptventil gegen die Kraft der Feder 7 öffnet. Der Druck am Ausgang 3 nimmt dann einen vorgegebenen Minimalwert an, welcher durch die Stellung des Schließkörpers 62 gegenüber dem Sitz 63 im zweiten Druckbegrenzer 61 bestimmt wird. Sobald nämlich in der geschilderten Weise das Hauptventil öffnet und am Auslaß 3 ein Ausgangsdruck entsteht, gelangt dieser auch über den Kanal 71 in die Antriebskammer 70 des Druckbegrenzerventils 62, 63. Der Druck unter der Membran 65 hebt den Schließkörper 62 vom Ventilsitz 63 um einen solchen Betrag ab, daß sich ein Kräftegleichgewicht einstellt zwischen der von oben auf die Membran 65 einwirkenden Kraft der Feder 66 und der von unten auf die Membran einwirkenden Kraft, welche durch den Druck in der Kammer 70 erzeugt wird. Dieses Kraftgleichgewicht bestimmt den Mindestdruck am Auslaß 3. Die weitere Arbeitsweise der in Fig. 2 wiedergegebenen Ausführungsform des Servodruckreglers entspricht derjenigen nach Fig. 1, so daß auf die dortige Beschreibung verwiesen werden kann.

Durch die Erfindung wird ein membrangesteuerter Gasdruckregler geschaffen, der infolge der Verwendung einer massearmen Tauchspule schnell auf etwaige unerwünschte Druckschwankungen anspricht, für die Einschaltung des Reglers und für dessen modulierender Betrieb den gleichen Antrieb verwendet und bei einfachem und übersichtlichem Aufbau auch auf herkömmliche Hauptgasventile mit Membranantrieb als Baugruppe aufsetzbar ist.

## Patentansprüche

1. Über einen Tauchspulantrieb steuerbarer Servodruckregler mit
a) einem vom Tauchspulantrieb (17 - 21) beaufschlagten, den Schließkörper (27) eines Servoventils (27, 28) tragenden, von einer Reglermembran (31) gehaltenen Antriebsstift (26);
b) einem hierzu koaxialen, gehäusefest angeordneten Ventilsitz (28) des Servoventils;
c) einem unter dem Einfluß einer Schließfeder (7) stehenden Schließkörper (5) eines zwischen Reglereingang (2) und Reglerausgang (3) angeordneten Hauptventils (4, 5);
d) einer auf die Ventilstange (6) des Hauptschließkörpers (5) einwirkenden Arbeitsmembran (9);
e) einem ersten Verbindungskanal (37, 38) zwischen einer von der Arbeitsmembran (9) abgeschlossenen Antriebskammer (11) für den Hauptschließkörper (5) und einer vom Servoventil (27, 28) beeinflußten Steuerdruckkammer (15);
f) einem zweiten mit einer Querschnittsverengung (42, 47) versehenen Verbindungskanal (37, 50) zwischen Steuerdruckkammer (15) und Auslaßseite (3) des Hauptventils (4, 5); sowie
g) einem dritten ebenfalls mit einer Querschnittsverengung (39) versehenen Verbindungskanal (40) zwischen der Einlaßseite (2) des Hauptventils (4, 5) und dem Servoventil (27, 28),
**dadurch gekennzeichnet**, daß
h) der Antriebsstift (26) ferner den Schließkörper (29) eines Steuerventils (29, 30) trägt, dessen gehäusefester Ventilsitz (30) auf der dem Schließkörper (29) abgewandten Seite an die Steuerdruckkammer (15) angeschlossen ist, wobei der Raum zwischen Ventilsitz (30) und Schließkörper (29) des Steuerventils mit dem zweiten Verbindungskanal (52, 50) in Verbindung steht und die beiden Schließkörper (27, 29) derart am Antriebsstift (26) angeordnet sind, daß bei Einschaltung der Tauchspule (21) erst das Servoventil (27, 28) öffnet, ehe das Steuerventil (29, 30) wirksam wird.

2. Druckregler nach Anspruch 1, **dadurch gekennzeichnet**, daß die Steuerdruckkammer (15) den Raum zwischen den Ventilsitzen (28, 30) von Servoventil (27, 28) und Steuerventil (29, 30) umfaßt.

3. Druckregler nach Anspruch 1 oder 2, **dadurch gekennzeichnet**, daß die Querschnittsverengung des zweiten Verbindungskanals (37, 50) durch eine Drosselstelle gebildet ist.

4. Druckregler nach Anspruch 1 oder 2, **dadurch gekennzeichnet**, daß die Querschnittsverengung des zweiten Verbindungskanals (37, 50) durch das Ventil (42, 47) eines den maximalen Ausgangsdruck begrenzenden ersten Membrandruckbegrenzers (41) gebildet ist.

5. Druckregler nach Anspruch 4, **dadurch gekennzeichnet**, daß ein vierter Verbindungskanal (52,50; 64, 71) zwischen einer durch das Steuerventil (29, 30) von der Steuerdruckkammer (15) trennbaren Kammer (16) und der Auslaßseite (3) des Hauptventils (4, 5) angeordnet ist.

6. Druckregler nach Anspruch 5, **dadurch gekennzeichnet**, daß im vierten Verbindungskanal (64, 71) das Ventil (62, 63) eines den minimalen Ausgangsdruck bestimmenden zweiten Membrandruckbegrenzers (61) angeordnet ist.

7. Druckregler nach Anspruch 4, 5 oder 6, **dadurch gekennzeichnet**, daß das oder jedes der Ventile des/der Membrandruckbegrenzer (41, 61) einen von einer Membran (43, 65) getragenen Schließkörper (42, 63), eine die Membran in Schließrichtung vorspannende Feder (44, 66) sowie eine die gehäusefeste Abstützung dieser Feder bildende Einstellschraube (45, 67) aufweist.

8. Druckregler nach einem der Ansprüche 1 bis 7, **dadurch gekennzeichnet**, daß der Antriebsstift (26) koaxial durch die gehäusefesten Ventilsitze (28, 30) von Servoventil (27, 28) und Steuerventil (29, 30) hindurchragt.

9. Druckregler nach einem der Ansprüche 1 bis 8, **dadurch gekennzeichnet**, daß die Ventilstange (6) des Hauptventils (4, 5) durch die Schließfeder (7) einseitig an der Arbeitsmembran (9) anliegend gehalten ist.

10. Druckregler nach einem der Ansprüche 1 bis 9, **dadurch gekennzeichnet**, daß sich die Tauchspule (21) über eine schwache Feder (35) an einer in Bezug auf den gehäusefesten Magnetkreis (17 - 20) des Tauchspulantriebs verstellbaren Einstellschraube (34) zur Nullpunktverschiebung der Regelkennlinie abstützt.

## Claims

1. A servo pressure regulator controllable by means of a moving coil operator, said regulator comprising:
a) an operating pin (26) which is held by a control diaphragm (31), carries the closure member (27) of a servo valve (27,28), and is activated by the moving coil operator (17 - 21);
b) a stationary valve seat (28) of said servo valve arranged coaxially with respect to said operating pin;
c) a closure member (5) of a main valve (4, 5), which main valve is located between the inlet (2) and the outlet (3) of the regulator, with a closure spring (7) acting upon said closure member (5);
d) a working diaphragm (9) acting upon the valve rod (6) of the main closure member (5);
e) a first connecting channel (37, 38) between an operator chamber (11) for the main closure member (5) and a control pressure chamber (15), which closure member is controlled by said servo valve (27, 28), wherein the operator chamber (11) is closed by said working diaphragm (9);
f) a second connecting channel (37, 50) between said control pressure chamber (15) and said outlet (3) of the main valve (4, 5), which second channel includes a portion (42,47) of reduced diameter; and
g) a third connecting channel (40) between said inlet of the main valve (4, 5) and said servo valve (27, 28) and including a portion (39) of reduced diameter;
**characterized in that :**
h) the operating pin (26) furthermore carries the closure member (29) of a control valve (29, 30) whose stationary valve seat (30) is connected to said control pressure chamber (15) at the side remote from that closure member (29), wherein the space between said valve seat (30) and said closure member (28) of the control valve is connected to the second connecting channel (52, 50) and both closure members (27, 29) are arranged at said operating pin (26) such that when energizing said moving coil (21) at first said servo valve (27, 28) opens before said control valve (29, 30) becomes effective.

2. Pressure regulator according to claim 1, **characterized in that** the control pressure chamber (15) includes the space between the valve seats (28, 30) of said servo valve (27, 28) and said control valve (29, 30).

3. Pressure regulator according to claim 1 or 2, **characterized in that** the portion of reduced diameter in the second connecting channel (37, 50) is constituted by a throttle.

4. Pressure regulator according to claim 1 or 2, **characterized in that** the portion of reduced diameter in the second connecting channel (37, 50) is formed by the valve (42, 47) of a first diaphragm pressure limiter (41) limiting the maximum outlet pressure.

5. Pressure regulator according to claim 4, **characterized in that** a fourth connecting channel (52, 50; 64, 71) is provided between a chamber (16) and the outlet side (3) of said main valve (4, 5), which chamber (16) can be separated from the control pressure chamber (15) by means of the control valve (19, 30).

6. Pressure regulator according to claim 5, **characterized in that** the valve (62, 63) of a second diaphragm pressure limiter (61) is provided in said fourth connecting channel (64, 61), which second diaphragm pressure limiter determines the minimum outlet pressure.

7. Pressure regulator according to claim 4, 5 or 6, **characterized in that** the or each of the valves of the diaphragm pressure limiter(s) (41, 61) comprises a closure member (42, 63) carried by a diaphragm (43, 65), further comprises a spring (44, 66) biasing the diaphragm in closing direction, and finally comprises an adjustment screw (45, 67) forming the stationary abutment for said spring.

8. Pressure regulator according to one of the claims 1 to 7, **characterized in that** the operating pin (26) projects coaxially through the stationary valve seats (28, 30) of said servo valve (27, 28) and said control valve (29, 30).

9. Pressure regulator according to one of the claims 1 to 8, **characterized in that** the valve rod (6) of the main valve (4, 5) is held by said closure spring (7) in engagement with one side of the working diaphragm (9).

10. Pressure regulator according to one of the claims 1 to 9, **characterized in that** said moving coil (21) abuts via a weak spring (35) against an adjustment screw (34), which for adjusting the zero position of the control characteristic is adjustable in relation to the stationary magnetic circuit (17 - 20) of the moving coil operator.

## Revendications

1. Servorégulateur de pression pouvant être commandé par un système d'entraînement à bobine mobile, et comprenant:
a) une broche d'entraînement (26), sollicitée par le système d'entraînement à bobine mobile (17 à 21), portant le corps d'obturation (27) d'une servo-soupape (27, 28), maintenue par une membrane de régulateur (31);
b) un siège de soupape (28) de la servo-soupape, agencé fixé au carter, coaxialement à ladite broche d'entraînement;
c) subissant l'influence d'un ressort de fermeture (7), un corps d'obturation (5) d'une soupape principale (4, 5) agencée entre l'entrée de régulateur (2) et la sortie de régulateur (3);
d) une membrane de travail (9) agissant sur la tige de soupape (6) du corps d'obturation principal (5);
e) un premier canal de liaison (37, 38) entre une chambre d'entraînement (11) pour le corps d'obturation principal (5), fermée par la membrane de travail (9), et une chambre de pression de commande (15), influencée par la servo-soupape (27, 28);
f) un second canal de liaison (37, 50) pourvu d'un rétrécissement de section transversale (42, 47), entre la chambre de pression de commande (15) et le côté sortie (3) de la soupape principale (4, 5); ainsi
g) qu'un troisième canal de liaison (40) également pourvu d'un rétrécissement de section transversale (39), entre le côté entrée (2) de la soupape principale (4, 5) et la servo-soupape (27, 28),
caractérisé
h) en ce que la broche d'entraînement (26) porte, de plus, le corps d'obturation (29) d'une soupape de commande (29, 30), dont le siège de soupape (30) fixé au carter, sur le côté opposé au corps d'obturation (29), est raccordé à la chambre de pression de commande (15), l'espace entre le siège de soupape (30) et le corps d'obturation (29) de la soupape de commande étant en liaison avec le second canal de liaison (52, 50), et les deux corps d'obturation (27, 29) étant agencés de manière telle à la broche d'entraînement (26), que lors de la mise en marche de la bobine mobile (21), ce soit tout d'abord la servo-soupape (27, 28) qui ouvre, avant que ne devienne active la soupape de commande (29, 30).

2. Régulateur de pression selon la revendication 1, caractérisé en ce que la chambre de pression de commande (15) comprend l'espace entre les sièges de soupape (28, 30) de la servo-soupape (27, 28) et de la soupape de commande (29, 30).

3. Régulateur de pression selon la revendication 1 ou 2, caractérisé en ce que le rétrécissement de section transversale du second canal de liaison (37, 50) est formé par un emplacement d'étranglement.

4. Régulateur de pression selon la revendication 1 ou 2, caractérisé en ce que le rétrécissement de section transversale du second canal de liaison (37, 50) est formé par la soupape (42, 47) d'un premier limiteur de pression à membrane (41) limitant la pression de sortie maximale.

5. Régulateur de pression selon la revendication 4, caractérisé en ce qu'un quatrième canal de liaison (52, 50; 64, 71) est agencé entre une chambre (16) pouvant être séparée de la chambre de pression de commande (15) par la soupape de commande (29, 30), et le côté sortie (3) de la soupape principale (4, 5).

6. Régulateur de pression selon la revendication 5, caractérisé en ce que dans le quatrième canal de liaison (64, 71) est agencée la soupape (62, 63) d'un second limiteur de pression à membrane (61) déterminant la pression de sortie minimale.

7. Régulateur de pression selon la revendication 4, 5 ou 6, caractérisé en ce que la ou chacune des soupapes du/des limiteur(s) de pression à diaphragme (41, 61), présente un corps d'obturation (42, 63) porté par une membrane (43, 65), un ressort (44, 66) précontraignant la membrane dans la direction de fermeture, ainsi qu'une vis d'ajustement (45, 67) formant l'appui fixé au carter de ce ressort.

8. Régulateur de pression selon l'une des revendications 1 à 7, caractérisé en ce que la broche d'entraînement (26) fait saillie en traversant coaxialement les sièges de soupape (28, 30) fixés au carter, de la servo-soupape (27, 28) et de la soupape de commande (29, 30).

9. Régulateur de pression selon l'une des revendications 1 à 8, caractérisé en ce que la tige de soupape (6) de la soupape principale (4, 5) est maintenue adjacente, d'un côté, à la membrane de travail (9), par le ressort de fermeture (7).

10. Régulateur de pression selon l'une des revendications 1 à 9, caractérisé en ce que la bobine mobile (21) s'appuie, par l'intermédiaire d'un ressort faible (35), à une vis d'ajustement (34) pouvant être déplacée par rapport au circuit magnétique (17 à 20) fixé au carter, du système d'entraînement à bobine mobile, pour le décalage du point zéro de la courbe caractéristique de régulation.
